# EUROPEAN PATENT SPECIFICATION

(11) **EP 0 386 817 B1**
(45) Date of publication and mention of the grant of the patent: **12.05.1993**
(21) Application number: 90200426.6
(22) Date of filing: 23.02.1990
(51) Int. Cl.: A23C 11/10

(54) **Fermented food product**
Fermentiertes Lebensmittel
Produit alimentaire fermenté

(30) Priority: 07.03.1989 EP 89200561
(43) Date of publication of application: 12.09.1990
(73) Proprietor: UNILEVER N.V., 3013 AL Rotterdam (NL); UNILEVER PLC, London EC4P 4BQ (GB)
(72) Inventor: Van Oosten, Cornelis Willem, NL-3137 CL Vlaardingen (NL); Verhue, Walter Maurits Mark, NL-3233 LN Oostvoorne (NL)
(74) Representative: Hartong, Richard Leroy

(56) References cited:
- EP-A- 0 111 020
- DE-A- 2 406 600
- PROCESS BIOCHEMISTRY, October/November 1980, pages 8-13; A.A. PATEL et al.: "Lactic fermentation of soymilk - a review"
- FOOD SCIENCE & TECHNOLOGY ABSTRACTS, no. 85-04-P0090 (85-023756); S.M. SCHELLHAASS: "Characterization of exocellular slime produced by bacterial starter cultures used in the manufacture of fermented dairy products", & DISSERTATION ABSTRACTS INTERNATIONAL, B, vol. 44, no. 9, page 2698, 1984
- FOOD SCIENCE & TECHNOLOGY ABSTRACTS, no. 86-06-P0139 (86-036712); S.M. SCHELLHAASS: "Rheological and scanning electron microscopic examination of skim milk gels obtained by fermenting with ropy and non-ropy strains of lactic acid bacteria", & FOOD MICROSTRUCTURE, vol. 4, no. 2, pages 279-287, 1985
- CHEMICAL ABSTRACTS, vol. 105, no. 15, October 1986, page 552, abstract no. 132489n, Columbus, Ohio, US; Q. LI: "Studies on the flavor compounds of soymilk yogurt from lactic acid bacteria fermentation", & SHIPIN YU FAJIAO GONGYE 1986, (2), 1-16

## Description

The present invention relates to a fermented soymilk product and to foodstuffs or ingredients for foodstuffs, which at least partially comprise the fermented soymilk product.

The major drawback to the use of soybeans as a human food product is the beany or cardboard-like taste and the objectionable odour and colour of such products, as well as the relatively high percentage of certain carbohydrates naturally present in soybeans, which in their metabolism cause flatulence effects. Moreover, the products comprising soymilk usually exhibit an unpleasant sandy structure.

PROCESS BIOCHEMISTRY, Oct/Nov 1980, pages 9-13, gives an overview of soymilk fermentation. It is stated that the beany flavour cannot be completely removed by fermentation and that therefore fermented soymilk is perceptibly inferior in its flavour to the cow milk's product. Also the texture is said to be not so smooth.

In order to overcome the earlier mentioned disadvantages, it has been proposed in US-A-3,937,843 to eliminate a bean odour from soymilk by subjecting it (in the presence of added saccharide) to lactic fermentation, e.g. with Lactobacillus acidophilus or Streptococcus thermophilus, until the acidity is at most 4, after which the fermented product is subjected to vacuum distillation. Although this product has a reduced bean odour, the vacuum distillation also removes valuable taste components and still the texture of the product is not acceptable.

In order to improve the taste of soymilk in DE 24 06 600 still another proposal is contained. The proposed process comprises, additional to the regular process steps, one or two initial extractions with an acid aqueous solution to remove taste spoiling substances.

Lactic acid bacteria which form exocellular polysaccharides are known for the manufacture of fermented milk, but solely milk of dairy origin. Such use is mentioned in EP 0 111 020 and in DISSERTATION ABSTRACTS INTERNATIONAL, B, Vol. 44, no. 9, page 2698 (1984).

It has now been found that good-tasting fermented soymilk products having a texture which very closely resembles that of real dairy yoghurt can be obtained by fermenting soymilk with exocellular polysaccharide-forming lactic acid bacteria.

The present invention therefore relates to a fermented soymilk, which is obtained by fermenting soymilk with an exocellular polysaccharide-forming lactic acid bacterium.

The invention also relates to a method of preparing a fermented soymilk, which comprises inoculating soymilk with an exocellular polysaccharide-forming lactic acid bacterium, incubating the inoculated soymilk, and recovering the fermented soymilk.

Soymilk as such is a well-known product and various ways of producing it have been described (see for instance Food Chemistry, 17 (1985) (235-250). In the process of preparing fermented soymilk according to the present invention, any of the known soymilk types can be used. Of course, the better quality soymilks are preferred. The soymilk is inoculated with the exocellular polysaccharide-forming lactic acid bacterium and the optimal conditions for its growth are established and these are maintained at least during part of the incubation time.

The exocellular polysaccharide-forming lactic acid bacteria may be of the thermophilic or the mesophilic type. Examples of suitable exocellular polysaccharide-forming lactic acid bacteria are Streptococcus cremoris strains NRRL-B-12361, NRRL-B-12362 and NRRL-B-12363 (obtainable from the ARS Culture Collection maintained a The Northern Regional Research Laboratory, Peoria, Illinois, U.S.A.), the Streptococcus cremoris strains 968, 1186, 2006 and 2045 and the Streptococcus lactis 858 strain (obtainable from the National Collection of Dairy Microorganisms (NCDO), Reading, Great Britain). The bacteria may be used alone or in combination. Particularly if yoghurt-like products are required, a yoghurt culture, consisting of Lactobacillus bulgaricus NCDO 2482 and Streptococcus thermophilus NCDO 854, either of which produces exocellular polysaccharide may be used instead of a mesophilic culture. The texture of the final product is controlled by the amount of exocellular polysaccharide-forming lactic acid bacteria.

If the soymilk does not contain any fermentable sugar, it is necessary to add some carbon source for the bacterium culture. To this purpose a sugar solution, such as a solution, may be used, but other sugars can also be used, such as glucose, fructose, galactose or maltose. The final sugar concentration will be about 0,1-2% by weight, preferably about 0.5% by weight of the soymilk. The structure of the polysaccharide formed by the exocellular polysaccharide-forming lactic acid bacteria is to a certain extent also dependent on the type of sugar present or added as the carbon source.

Sometimes about 0.1% by weight of citric acid in the form of the free acid or an alkali metal salt may be added to increase the flavour of a final product.

In preparing the fermented soymilk, it is inoculated with generally from about 0.5 to 4% by weight of the bacterium culture and the fermentation is taking place at about 15°C to about 45°C for about 2 to about 24 hours. Each bacteria culture has its own optimum growth conditions and these conditions are usually aimed at.

After fermentation, the final fermented product may be used as an ingredient for foodstuffs. It is possible to mix the soymilk before or after fermentation with fruit (in the form of pieces, pulp and/or juice), edible fibers, flavouring agents, colouring agents and other functional additives, provided that this admixture does not detrimentally influence the fermentation process. Generally up to 10% by weight of such additions may be used.

Various products can be manufactured from the high protein fermented product such as low-fat spreads, dressings, whipped toppings, infant food formulations. The product may also be used as the starting material for soybean cheese and soybean beverage. It can also be converted into dry form e.g. by spray-drying.

The invention will now be illustrated by the following examples, which in no way are to be construed as limiting the scope of the present invention.

### Example 1

A 40% by weight solution of lactose in water was made and sterilized at 120° for 15 minutes and to 1 litre of soybean milk (Provamel, ex. Alpro-Izegern, Belgium) was added aseptically 12.5 ml of this lactose solution. To 100 ml of the soybean milk with lactose (pH = 6.5), 1.0% by weight of a culture of exocellular polysaccharide-forming lactic acid bacteria (Streptococcus cremoris NRRL-B-12361) was added and the inoculated mixture was fermented for 15 hours at 25°C, after which the pH had dropped to 4.60. After fermentation, a product with a highly viscous consistency and practically no beany flavour was obtained.

### Example 2

The fermented product obtained in Example 1 was used to prepare a dressing containing egg yolk. An emulsion phase consisting of the following ingredients (in percentages by weight of the total product) was formed by mixing all ingredients, except water and egg yolk, then slowly adding this mixture to the water and egg yolk, and finally emulsifying the mixture with an Ultra-Turrax (Trade Mark).

### Emulsion phase:

- Sunflower oil: 24.45%
- Egg yolk: 2.45%
- Acetic acid (10%): 2.00%
- Stabilizer: 0.24%
- Colouring agent: 0.05%
- Water: 8.50%

A water phase was formed using the following ingredients (in percentages by weight of the total product) by mixing all the ingredients with a ribbon stirrer and heating slowly to 85°C. The mixture was kept for about 5 min. at 85°C under constant slow stirring and subsequently cooled to ambient temperature.

### Water phase:

- Sodium chloride: 1.500%
- Sugar: 9.036%
- Citric acid: 0.200%
- Acetic acid (12%): 2.000%
- Preservative: 0.182%
- Flavouring: 1.000%
- Modified starch: 3.000%
- Fermented product of Example 1: 14.656%
- Water: 30.736%

The emulsion phase was slowly added to the water phase, the obtained mixture was deaerated and homogenized by passing it through a colloid mill, and finally filled in clean, sterilized bottles. A creamy, smooth dressing of excellent texture was obtained.

### Example 3

1 Litre of soybean milk, containing 0.5% (w/v) of lactose was prepared in the manner as described in Example 1. This milk was inoculated with 2.5% by weight of a thermophilic culture of lactic acid bacteria, consisting of Streptococcus thermophilus NCDO 859 and Lactobacillus bulgaricus NCDO 2482 in equal weight proportions. Both organisms are exocellular polysaccharide forming bacteria. The inoculated soybean milk was incubated at 42°C during 3 hours, after which the pH had dropped to 4.7. It was then cooled. The product had acquired a highly viscous consistency and a yoghurt-like flavour.

### Example 4

In the same way as described in Example 2, a dressing with vegetables was prepared from an emulsion phase and a water phase, but now using the fermented product obtained in Example 3.

### Emuslion phase:

- Sunflower oil: 24.95%
- Stabilizer: 0.25%
- Colouring agent: 0.05%

### Water phase:

- Sodium chloride: 1.500%
- Sugar: 5.000%
- Citric acid: 0.200%
- Acetic acid (10%): 3.667%
- Preservative: 0.200%
- Flavouring: 1.000%
- Stabilizer: 3.400%
- Fermented product of Example 3: 14.500%
- Water: 45.283%

90% by weight of the obtained basic dressing was mixed with 10% by weight of finely chopped vegetable mix to yield a creamy, smooth and vegetable-filled dressing of excellent texture.

## Claims

1. A fermented soymilk which is obtained by fermenting soymilk with an exocellular polysaccharideforming lactic acid bacterium.

2. A fermented soymilk which is obtained by fermenting soymilk with a thermophilic exocellular polysaccharide-forming lactic acid bacterium.

3. A fermented soymilk which is obtained by fermenting soymilk with a mesophilic exocellular polysaccharide-forming lactic acid bacterium.

4. A product according to Claims 1-3, in which the lactic acid bacterium is selected from the group consisting of: Streptococcus cremoris NRRL-B-12361, Streptococcus cremoris NRRL-B-12362, Streptococcus cremoris NRRL-B-12363, Streptococcus cremoris 968, Streptococcus cremoris 1186, Streptococcus cremoris 2006, Strepcoccus cremoris 2045, Streptococcus lactis 858, and mixtures thereof.

5. A product according to Claims 1-4, in which an exocellular polysaccharide-forming yoghurt culture is present during the fermentation.

6. A product according to Claim 5, in which the yoghurt culture is a mixture of exocellular polysaccharide forming Lactobacillus bulgaricus NCDO 2482 and Streptococcus thermophilus NCDO 859.

7. A process of preparing of fermented soymilk according to any one of claims 1-6, which comprises the steps of:
(a) inoculating a soymilk with an exocellular polysaccharide-forming lactic acid bacterium,
(b) incubating the inoculated soymilk, and
(c) recovering the fermented product.

8. A process according to Claim 7, in which a thermophilic exocellular polysaccharide-forming lactic acid bacterium is used.

9. A process according to claim 7, in which a mesophilic exocellular polysaccharide-forming lactic acid bacterium is used.

10. A process according to Claims 7-9, in which the exocellular polysaccharide-forming lactic acid bacterium is selected from the group consisting of: Streptococcus cremoris NRRL-B-12361, Streptococcus cremoris NRRL-B-12362, Streptococcus cremoris NRRL-B-12363, Streptococcus cremoris 968, Streptococcus cremoris 1186, Streptococcus cremoris 2006, Strepcoccus cremoris 2045, Streptococcus lactis 858, and mixtures thereof.

11. A process according to Claim 7, in which 0.5 to 4% by weight of the exocellular polysaccharide-forming lactic acid bacterium is used.

12. A process according to Claims 7-11, in which in step (a) also is inoculated with an exocellular polysaccharide-forming yoghurt culture.

13. A process according to Claim 12, in which the yoghurt culture is a mixture of exocellular polysaccharide-forming Lactobacillus bulgaricus NCDO 2482 and Streptococcus thermophilus NCDO 859.

14. A process according to Claims 7-13, in which, before or after fermentation, the soy milk is mixed with a functional additive.

15. A process according to Claim 14, in which the functional additive is selected from the group consisting of: fruit, edible fibers, flavouring agents, colouring agents or mixtures thereof.

16. A process according to Claims 14-15, in which up to 10% by weight of the functional additive is used.

17. A process according to Claims 7-16, in which, before fermentation, 0.1 to 2% by weight of the soymilk of a carbon source is added.

18. A process according to Claim 17, in which the carbon source is selected from the group consisting of: lactose, glucose, fructose, galactose, maltose, and mixtures thereof.

19. A process according to Claims 7-18, in which citric acid is present during the fermentation.

20. A food product or an ingredient for a food product at least partially comprising the product according to any one of Claims 1-6.

## Patentansprüche

1. Fermentierte Sojamilch, erhalten durch Fermentieren von Sojamilch mit einem exozelluläres Polysaccharid bildenden Milchsäurebakterium.

2. Fermentierte Sojamilch, die durch Fermentieren von Sojamilch mit einem thermophilen, exozelluläres Polysaccharid bildenden Milchsäurebakterium erhalten ist.

3. Fermentierte Sojamilch, die durch Fermentieren von Sojamilch mit einem mesophilen, exozelluläres Polysaccharid bildenden Milchsäurebakterium erhalten ist.

4. Produkt nach den Ansprüchen 1 bis 3, in welchem das Milchsäurebakterium aus der aus Streptococcus cremoris NRRL-B-12361, Streptococcus cremoris NRRL-B-12362, Streptococcus cremoris NRRL-B-12363, Streptococcus cremoris 968, Streptococcus cremoris 1186, Streptococcus cremoris 2006, Streptococcus cremoris 2045, Streptococcus lactis 858 und deren Mischungen bestehenden Gruppe ausgewählt ist.

5. Produkt nach den Ansprüchen 1 bis 4, in welchem eine exozelluläres Polysaccharid bildende Joghurtkultur während der Fermentation vorliegt.

6. Produkt nach Anspruch 5, in welchem die Joghurtkultur eine Mischung aus exozelluläres Polysaccharid bildendem Lactobacillus bulgaricus NCDO 2482 und Streptococcus thermophilus NCDO 859 ist.

7. Verfahren zur Herstellung einer fermentierten Sojamilch nach irgendeinem der Ansprüche 1 bis 6, das die Schritte umfaßt:
(a) Animpfen einer Sojamilch mit einem exozelluläres Polysaccharid bildenden Milchsäurebakterium,
(b) Inkubieren der angeimpften Sojamilch und
(b) Gewinnen des fermentierten Produktes.

8. Verfahren nach Anspruch 7, in welchem ein thermophiles, exozelluläres Polysaccharid bildendes Milchsäurebakterium verwendet wird.

9. Verfahren nach Anspruch 7, in welchem ein mesophiles, exozelluläres Polysaccharid bildendes Milchsäurebakterium verwendet wird.

10. Verfahren nach den Ansprüchen 7 bis 9, in welchem das exozelluläres Polysaccharid bildende Milchsäurebakterium aus der aus Streptococcus cremoris NRRL-B-12361, Streptococcus cremoris NRRL-B-12362, Streptococcus cremoris NRRL-B-12363, Streptococcus cremoris 968, Streptococcus cremoris 1186, Streptococcus cremoris 2006, Streptococcus cremoris 2045, Streptococcus lactis 858 und deren Mischungen bestehenden Gruppe ausgewählt wird.

11. Verfahren nach Anspruch 7, in welchem 0,5 bis 4 Gew.-% des exozelluläres Polysaccharid bildenden Milchsäurebakteriums verwendet werden.

12. Verfahren nach den Ansprüchen 7 bis 11, in welchem in Schritt (a) auch mit einer exozelluläres Polysaccharid bildenden Joghurtkultur angeimpft wird.

13. Verfahren nach Anspruch 12, in welchem die Joghurtkultur eine Mischung aus exozelluläres Polysaccharid bildendem Lactobacillus bulgaricus NCDO 2482 und Streptococcus thermophilus NCDO 859 ist.

14. Verfahren nach den Ansprüchen 7 bis 13, in welchem die Sojamilch vor oder nach der Fermentation mit einem funktionellen Zusatz gemischt wird.

15. Verfahren nach Anspruch 14, in welchem der funktionelle Zusatz aus der aus Obst, eßbaren Fasern, Aromamitteln, Färbemitteln und deren Mischungen bestehenden Gruppe ausgewählt wird.

16. Verfahren nach den Ansprüchen 14 bis 15, in welchem bis zu 10 Gew.-% des funktionellen Zusatzes verwendet werden.

17. Verfahren nach den Ansprüchen 7 bis 16, in welchem vor der Fermentation 0,1 bis 2 Gew.-%, bezogen auf die Sojamilch, einer Kohlenstoffquelle zugefügt werden.

18. Verfahren nach Anspruch 17, in welchem die Kohlenstoffquelle aus der aus Lactose, Glucose, Fructose, Galactose, Maltose und deren Mischungen bestehenden Gruppe ausgewählt wird.

19. Verfahren nach den Ansprüchen 7 bis 18, in welchem Zitronensäure während der Fermentaiton vorliegt.

20. Lebensmittel oder Bestandteil für ein Lebensmittel, das mindestens teilweise das Produkt nach irgendeinem der Ansprüche 1 bis 6 umfaßt.

## Revendications

1. Lait de soja fermenté obtenu en faisant fermenter du lait de soja avec une bactérie lactique formant des polysaccharides exocellulaires.

2. Lait de soja fermenté obtenu en faisant fermenter un lait de soja avec une bactérie lactique formant des polysaccharides exocellulaires, thermophile.

3. Lait de soja fermenté obtenu en faisant fermenter un lait de soja avec une bactérie lactique formant des polysaccharides exocellulaires, mésophile.

4. Produit selon les revendications 1 à 3, dans lequel la bactérie lactique est choisie parmi : Streptococcus cremoris NRRL-B-12361, Streptococcus cremoris NRRL-B-12362, Streptococcus cremoris NRRL-B-12363, Streptococcus cremoris 968, Streptococcus cremoris 1186, Streptococcus cremoris 2006, Streptococcus cremoris 2045, Streptococcus lactiss 858, et des mélanges de celles-ci.

5. Produit selon les revendications 1 à 4, dans lequel une culture de yaourt formant des polysaccharides exocellulaires est présente au cours de la fermentation.

6. Produit selon la revendication 5, dans lequel la culture de yaourt est un mélange de Lactobacillus bulgaricus NCDO 2482 et Streptococcus thermophilus NCDO 859 formant des polysaccharides exocellulaires.

7. Procédé de préparation d'un lait de soja selon l'une quelconque des revendications 1 à 6, qui comprend les étapes consistant à :
(a) inoculer à un lait de soja une bactérie lactique formant des polysaccharides exocellulaires,
(b) faire incuber le lait de soja inoculé, et
(c) récupérer le produit fermenté.

8. Procédé selon la revendication 7, dans lequel on utilise une bactérie lactique formant des polysaccharides exocellulaires, thermophile.

9. Procédé selon la revendication 7, dans lequel on utilise une bactérie lactique formant des polysaccharides exocellulaires, mésophile.

10. Procédé selon les revendications 7 à 9, dans lequel la bactérie lactique formant des polysaccharides exocellulaires est choisie parmi Streptococcus cremoris NRRL-B-12361, Streptococcus cremoris NRRL-B-12362, Streptococcus cremoris NRRL-B-12363, Streptococcus cremoris 968, Streptococcus cremoris 1186, Streptococcus cremoris 2006, Streptococcus cremoris 2045, Streptococcus lactis 858, et des mélanges de celles-ci.

11. Procédé selon la revendication 7, dans lequel on utilise 0,5 à 4 % en poids de la bactérie lactique formant des polysaccharides exocellulaires.

12. Procédé selon les revendications 7 à 11, dans lequel on inocule également dans l'étapes (a) une culture de yaourt formant des polysaccharides exocellulaires.

13. Procédé selon la revendication 12, dans lequel la culture de yaourt est un mélange de Lactobacillus bulgaricus NCDO 2482 et Streptococcus thermophilus NCDO 859 formant des polysaccharides exocellulaires.

14. Procédé selon les revendications 7 à 13, dans lequel, avant ou après fermentation, on mélange le lait de soja avec un additif fonctionnel.

15. Procédé selon la revendication 14, dans lequel l'additif fonctionnel esr choisi parmi des fruits, des fibres comestibles, des arômes, des colorants ou des mélanges de ceux-ci.

16. Procédé selon les revendications 14 et 15, dans lequel on utilise jusqu'à 10 % en poids de l'additif fonctionnel.

17. Procédé selon les revendications 7 à 16, dans lequel, avant fermentation, on ajoute 0,1 à 2 % en poids du lait de soja d'une source de carbone.

18. Procédé selon la revendication 17, dans lequel la source de carbone est choisie parmi le lactose, le glucose, le fructose, le galactose, le maltose et des mélanges de ceux-ci.

19. Procédé selon les revendications 7 à 18, dans lequel de l'acide citrique est présent au cours de la fermentation.

20. Produit alimentaire ou ingrédient pour un produit alimentaire comprenant au moins partiellement le produit conforme à l'une quelconque des revendications 1 à 6.
